# EUROPEAN PATENT APPLICATION

(11) **EP 4 848 793 A1**
(43) Date of publication of application: **02.12.2026**
(21) Application number: 24920329.0
(22) Date of filing: 25.01.2024
(51) Int. Cl.: H04W 24/10, H04W 16/28, H04W 48/16, H04W 72/0457

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); SHIBAIKE, Naoya, Tokyo 100-6150 (JP); NAGATA, Satoshi, Tokyo 100-6150 (JP); LI, Xiang, Beijing, 100190 (CN); HOU, Xiaolin, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2024/002192
(87) International publication number: WO 2025/158607

(57) **Abstract**

A terminal according to an aspect of the present disclosure includes: a receiving section that receives a setting related to a plurality of downlink reference signals and a plurality of points for transmission and receives the plurality of downlink reference signals; and a control section that determines a cluster that is a part of the plurality of points based on a result of reception of the plurality of downlink reference signals, the setting, and information related to deployment of a plurality of antennas of the terminal, and controls transmission of a report related to the cluster and reception of a signal from the cluster.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (NPL 1). Furthermore, the specifications of LTE-Advanced (3GPP Rel. 10 to 14) have been drafted for the purpose of further increasing capacity and advancement of LTE (third generation partnership project (3GPP (registered trademark)) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

NPL 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (for example, NR), cell-free communication in which a terminal (user terminal, user equipment (UE)) performs communication by using a unit different from that of an existing cell is studied.

However, studies on which access point (AP)/transmission/reception point (TRP) is used for communication are not sufficient. If these studies are not sufficient, the throughput may be suppressed when an appropriate AP/TRP is not used.

Therefore, an object of the present disclosure is to provide a terminal, a radio communication method, and a base station for performing communication by using an appropriate AP/TRP.

### Solution to Problem

A terminal according to an aspect of the present disclosure includes: a receiving section that receives a setting related to a plurality of downlink reference signals and a plurality of points for transmission and receives the plurality of downlink reference signals; and a control section that determines a cluster that is a part of the plurality of points based on a result of reception of the plurality of downlink reference signals, the setting, and information related to deployment of a plurality of antennas of the terminal, and controls transmission of a report related to the cluster and reception of a signal from the cluster.

### Advantageous Effects of Invention

According to the aspect of the present disclosure, it is possible to perform communication by using an appropriate AP/TRP.

### Brief Description of Drawings

[FIG. 1] Figs. 1A and 1B illustrate an outline of MIMO.
[FIG. 2] Figs. 2A and 2B illustrate an outline of a cellular system and a cell-free system.
[FIG. 3] Figs. 3A to 3C illustrate examples of an outline of each assumption of a cell-free configuration.
[FIG. 4] Fig. 4 illustrates an example of AP clustering.
[FIG. 5] Fig. 5 illustrates an example of AP clustering for CJT.
[FIG. 6] Fig. 6 illustrates an example of a DL base implementation method 1.
[FIG. 7] Fig. 7 illustrates an example of a DL base implementation method 2.
[FIG. 8] Fig. 8 illustrates an example of a DL base implementation method 3.
[FIG. 9] Fig. 9 illustrates an example of a smaller AP cluster.
[FIG. 10] Fig. 10 illustrates an example of a bigger AP cluster.
[FIG. 11] Fig. 11 illustrates an example of an AP clustering procedure.
[FIG. 12] Figs. 12A to 12C illustrate a first example of type 1 of a correspondence relationship between a CMR and an AP.
[FIG. 13] Figs. 13A to 13C illustrate a second example of type 1 of the correspondence relationship between the CMR and the AP.
[FIG. 14] Fig. 14 illustrates a first example of type 2 of the correspondence relationship between the CMR and the AP.
[FIG. 15] Figs. 15A and 15B illustrate a second example of type 2 of the correspondence relationship between the CMR and the AP.
[FIG. 16] Figs. 16A and 16B illustrate a third example of type 2 of the correspondence relationship between the CMR and the AP.
[FIG. 17] Figs. 17A to 17C illustrate an example of type 3 of the correspondence relationship between the CMR and the AP.
[FIG. 18] Figs. 18A and 18B illustrate a first example of a parameter for reporting of the AP cluster.
[FIG. 19] Fig. 19 illustrates a second example of the parameter for reporting of the AP cluster.
[FIG. 20] Fig. 20 illustrates an example of setting and reporting of an index of the AP cluster.
[FIG. 21] Fig. 21 is a diagram illustrating an example of a schematic configuration of a radio communication system according to one embodiment.
[FIG. 22] Fig. 22 is a diagram illustrating an example of a configuration of a base station according to one embodiment.
[FIG. 23] Fig. 23 is a diagram illustrating an example of a configuration of a user terminal according to one embodiment.
[FIG. 24] Fig. 24 is a diagram illustrating an example of a hardware configuration of a base station and a user terminal according to one embodiment.
[FIG. 25] Fig. 25 is a diagram illustrating an example of a vehicle according to one embodiment.

### Description of Embodiments

### (Cell-free Communication)

Existing radio communication systems (for example, 5G NR) adopted a cellular method in which one cell is formed by one antenna/TRP in principle. The area formed by the cell is fixed/static.

In addition, in an existing radio communication system (for example, Rel. 16 or later), distributed Multi Input Multi Output (distributed MIMO, e.g., multi-TRP utilizing a plurality of transmission/reception points (TRPs)) in which a communication area is formed by coverage of a plurality of antennas/TRPs has been introduced. In the distributed MIMO, simultaneous communication using the plurality of antennas/TRPs and communication using one antenna/TRP can be performed.

By adopting distributed MIMO, a more preferable line-of-sight environment can be prepared, and performance related to MIMO can be improved.

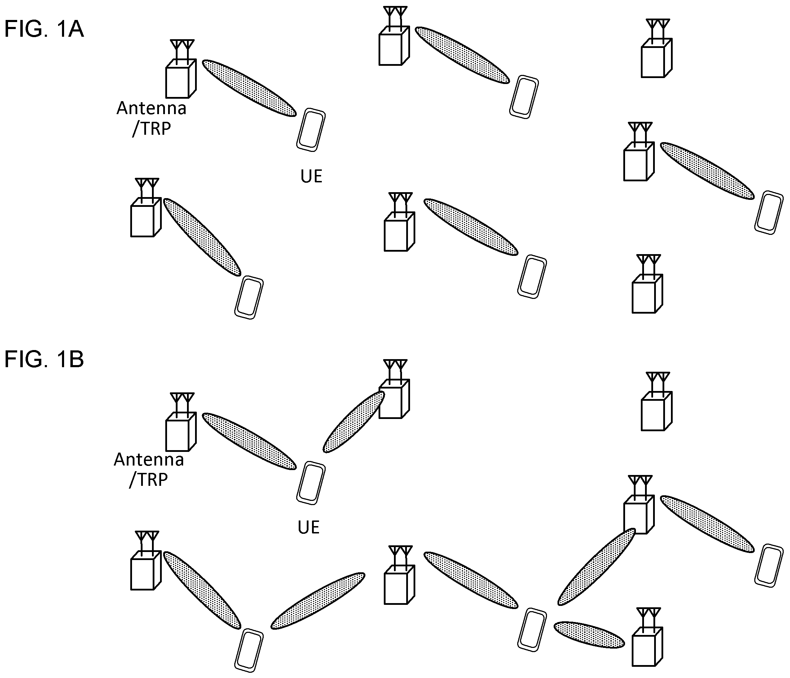

Figs. 1A and 1B are diagrams illustrating an outline of MIMO. Fig. 1A illustrates an example of Co-located MIMO. In Co-located MIMO, one UE communicates with one antenna/TRP.

On the other hand, Fig. 1B illustrates an example of distributed MIMO. In distributed MIMO, one UE communicates with multiple coordinated antennas/TRPs.

In a future radio communication system (for example, Rel. 20 or later), introduction of cell-free communication has been studied for the purpose of further improving performance and improving energy consumption efficiency through reduction of interference among a plurality of antennas/TRPs, improvement of a line-of-sight environment corresponding to utilization of a high frequency, improvement of frequency utilization efficiency of the entire system, and application of equal and high quality communication to each user.

The cell-free communication may be referred to as cell-free massive MIMO (mMIMO) or large-scale distributed MIMO (distributed MIMO, D-MIMO). The cell-free communication uses coherent coordination between a large number of access points. The cell-free communication may include at least one of ultra-dense deployment, scalable cooperation, user-centric clustering, super carrier aggregation, or analog fronthaul. A user plane for cell-free communication may perform more flexible scheduling than existing scheduling. A control plane for cell-free communication may maintain some form of cells to facilitate signaling.

In the cell-free communication, unlike a conventional cellular scheme, one area (which may be referred to as a cell/sub-cell or the like) may be formed by a plurality of antennas/TRPs. That is, the area may mean a cell that does not depend on the position of the antenna.

In the cell-free communication, a set of antennas/TRPs used for area formation may be changed in accordance with the demand of the UE. For example, the set of antennas/TRPs may be changed based on the number of UEs/the number of traffic/communication applications (for example, initial access/data communication/measurement/report, etc.) or the like that is not the coverage of the antennas/TRPs.

In other words, in the cell-free communication, the coverage among a plurality of antennas/TRPs may overlap.

In the cell-free communication, a direction in which a synchronization signal (for example, it may be referred to as a synchronization signal block (SSB), a synchronization signal/physical broadcast channel (SS/PBCH) block, or the like) is transmitted may be controlled in each antenna/TRP.

Further, in cell-free communication, a central unit (CU)/distributed unit (DU) may be virtualized for each antenna/TRP. Alternatively, each antenna/TRP may be managed only by the CU.

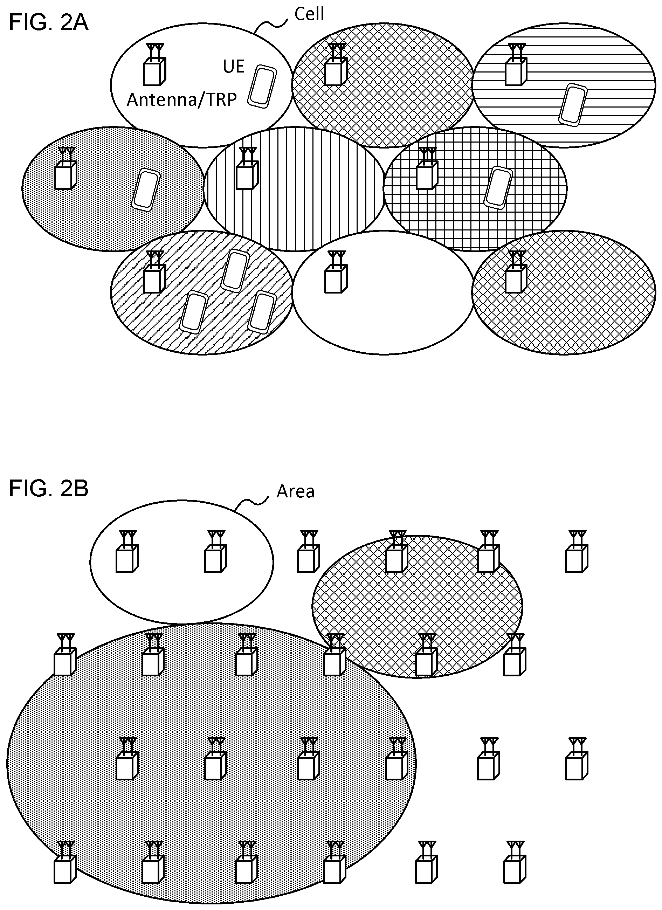

Fig. 2A is a diagram illustrating an outline of a cellular system. Fig. 2A illustrates a cell formed by each antenna/TRP, and the UE performs communication based on the cell.

On the other hand, Fig. 2B is a diagram illustrating an outline of the cell-free system. In the example illustrated in Fig. 2B, the installed antenna/TRP does not form a fixed/static cell in a cellular system. As illustrated in Fig. 2B, in the cell-free system, one or more antennas/TRPs form an area according to a condition. Therefore, in the cell-free system, each antenna/TRP may not need to correspond to the same physical cell ID, and areas among a plurality of antennas/TRPs may overlap.

The cell-free communication may be realized, for example, by adjusting a set of antennas/TRPs controlled by a central control unit (for example, CU).

In the cell-free system, a first cell (for example, it may be referred to as a cell/super cell/macro cell/large cell, or the like.) whose physical range is fixed, such as a cell in a 5G NR system, and a second cell (for example, it may be referred to as a sub-cell/area/micro cell/cell/small cell/second cell in the first cell, or the like) whose physical range semi-statically/dynamically fluctuates based on a condition may be formed. For example, to be distinguished from the second cell, the first cell may be referred to as a super cell. In a case where the super cell is composed of a plurality of second cells, the second cell may have the same definition, operation, and coverage as an existing cell in NR. For example, in order to distinguish the second cell from the first cell, the second cell may be referred to as a sub-cell. In a case where super cell or the cell is composed of a plurality of sub-cells, the sub-cell may have a definition/operation/coverage similar to an existing cell in NR.

The first cell may be a cell newly defined in a future radio communication system, or a definition of a cell in an existing radio communication system may be reused.

For the configuration of the first cell and the second cell, the following Assumptions 1 and 2 are considered:
Assumption 1: The first cell includes a plurality of TRPs having one cell ID (physical cell ID (PCI)). The plurality of TRPs can perform transmission and reception in a coordinated manner.
Assumption 2: The first cell includes a plurality of TRPs (or sub-cells) with different cell IDs. The plurality of TRPs/sub-cells can perform transmission and reception in a coordinated manner.

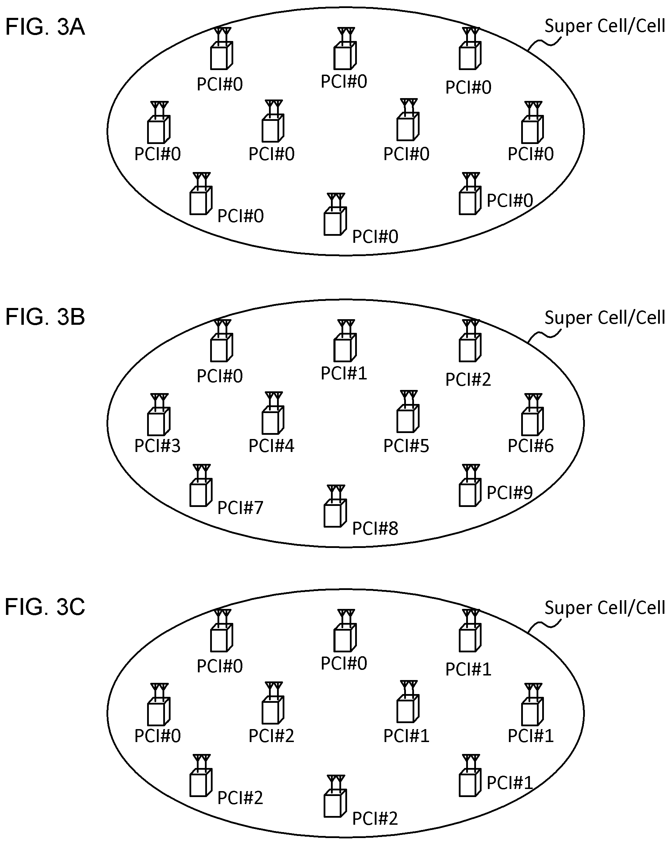

Fig. 3A is a diagram illustrating an example of an outline of Assumption 1 of the cell-free configuration. In the example illustrated in Fig. 3A, each TRP included in the first cell (super cell/cell) has the same PCI (PCI#0). The plurality of TRPs can perform communication with one UE in a coordinated manner.

Fig. 3B is a diagram illustrating an example of an outline of Assumption 2 of the cell-free configuration. In the example illustrated in Fig. 3B, each TRP included in the first cell (super cell/cell) has a different PCI (PCI#0 to PCI#9). The plurality of TRPs can perform communication with one UE in a coordinated manner.

Fig. 3C is a diagram illustrating another example of an outline of Assumption 2 of the cell-free configuration. In the example illustrated in Fig. 3A, a PCI is allocated to each TRP included in the first cell (super cell/cell). In the example illustrated in Fig. 3C, different from the example in Fig. 3B, the same PCI may correspond to a plurality of TRPs. The plurality of TRPs can perform communication with one UE in a coordinated manner. The plurality of TRPs associated with the same PCI may be included in one cell.

Transmission/reception with TRP/sub-cell coordination may be based on at least one of the following several schemes supported in NR.
◇Transmission of a single TRP/sub-cell with dynamic TRP/sub-cell switching (single TRP transmission)
◇Joint transmission using a plurality of TRPs/sub-cells (multi-TRP joint transmission) The joint transmission may be based on single DCI or multi-DCI. The joint transmission may be non-coherent joint transmission (NCJT) or coherent joint transmission (CJT).

For the cell-free communication, assuming ideal backhaul and tight coordination, in a joint transmission manner, CJT may be prioritized over NCJT, and single-DCI-based joint transmission may be prioritized over multi-DCIs-based joint transmission.

### (Ultra-High-Density Network for Large-scale Indoor Scenario)

An ultra-dense deployment is more suitable for a large-scale indoor scenario than for an outdoor scenario. In an evaluation scenario of NR, inter-site distance (ISD) =20 m is used for an indoor hotspot scenario. In cell-free communication, the range may be from a few cm to a few m.

### (Many APs)

Coherent joint-transmission (CJT) of a large number of densely deployed access points (APs) is important for guaranteed performance improvement in cell-free mMIMO.

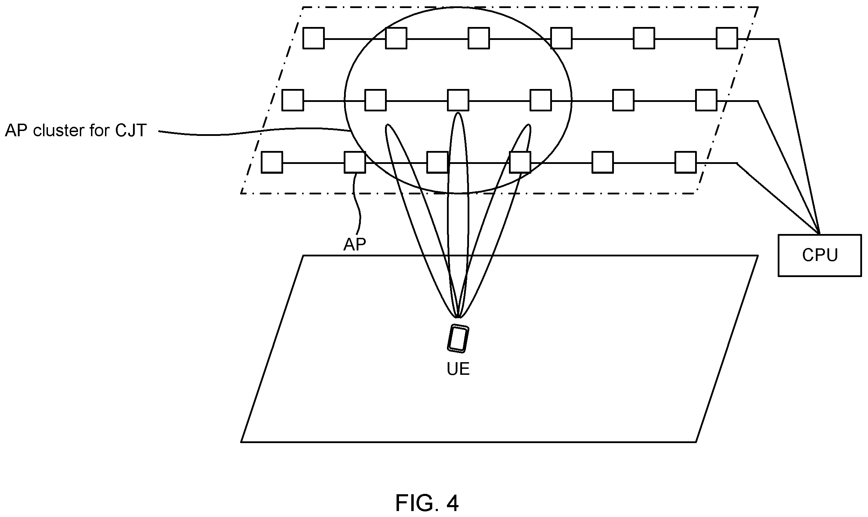

As illustrated in the example of Fig. 4, it is difficult to appropriately select a set of APs for a certain UE from a large number of candidate APs (AP clustering). The plurality of APs may be connected to a central station via Analogue-Radio over Fiber (A-RoF). The central station, a central processing unit (CPU), the central unit (CU), the distributed unit (DU), and a base station may be interchangeable with each other.

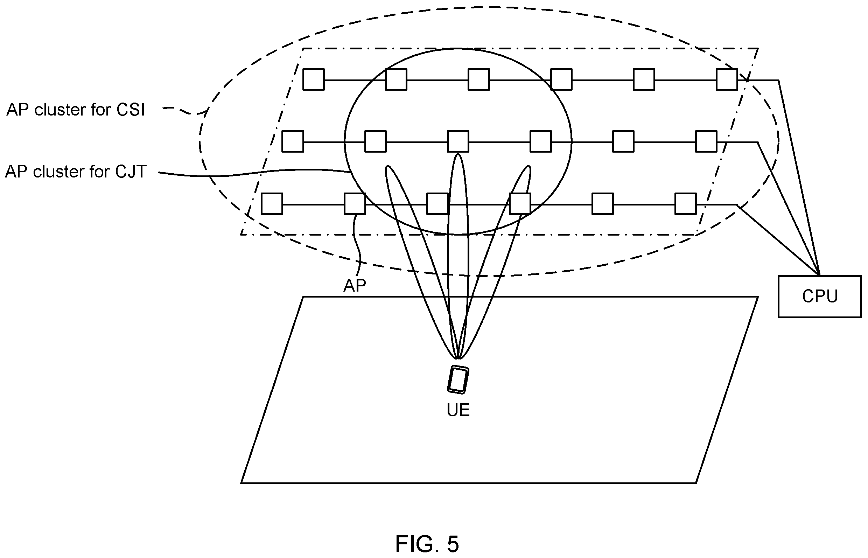

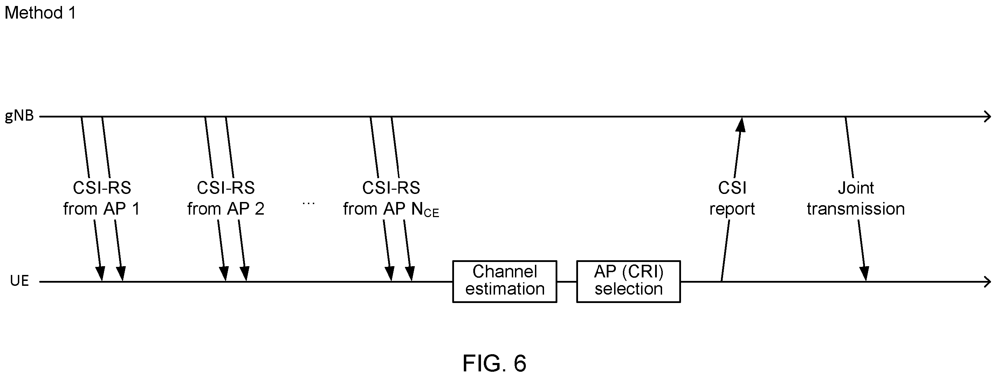

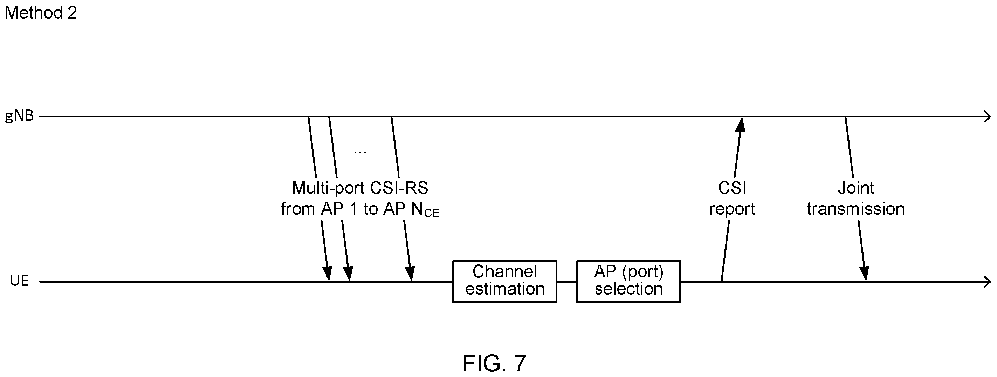

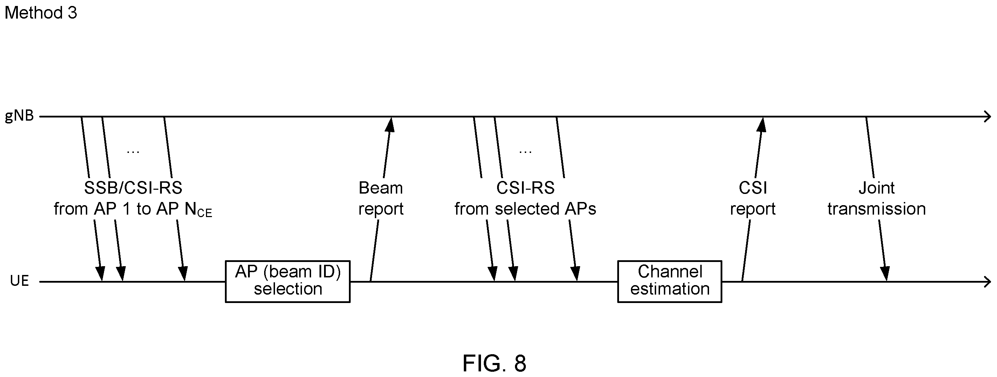

To transmit a DL RS, a gNB schedules a large-scale set of APs (AP cluster for CSI) and narrows down a subset for CJTs (AP cluster for CJT) based on a UE report (Fig. 5). In NR, there are the following three DL base implementation methods.
◆ Method 1 (Fig. 6) uses a CSI-RS that has undergone TDM (defined in Rel. 18 for FR1). The number of APs for CSI is limited by channel coherent time. The gNB transmits each of a plurality of CSI-RSs from the plurality of APs. The UE performs channel estimation based on the plurality of CSI-RSs, selects APs (CSI-RS resource indicators, CRIs), and reports a selection result as a CSI report. The gNB determines APs for CJT based on the report and performs CJT by using the determined APs.
◆ Method 2 (Fig. 7) uses a multi-port CSI-RS (dependent on the implementation). The number of APs for CSI is limited by the number of CSI-RS ports. The gNB transmits a CSI-RS by using each of a plurality of CSI-RS ports from the plurality of APs. The UE performs channel estimation based on the CSI-RS, selects APs (ports), and reports a selection result as a CSI report. The gNB determines APs for CJT based on the report and performs CJT by using the determined APs.
◆ Method 3 (Fig. 8) uses beam management (BM) (dependent on the implementation). The number of APs for CSI is limited by the number of beams. The gNB transmits an SSB/CSI-RS by using each of a plurality of beams from the plurality of APs. The UE selects APs (beam IDs) based on the SSB/CSI-RS, and reports a selection result as a beam report. The gNB transmits a CSI-RS from the selected APs. The UE performs channel estimation based on the CSI-RS, and reports a result as a CSI report. The gNB determines APs for CJT based on the report and performs CJT by using the determined APs.

The channel coherent time (CCT) depends on the maximum Doppler shift. The channel coherent time is a time during which a measured channel characteristic is available or a time until the measured channel characteristic becomes unavailable (channel aging). The maximum Doppler shift is estimated by a relative velocity between a transmitter and a receiver. The channel coherent time T_{c} is approximated by 1/Δfₘₐₓ. Here, Δfₘₐₓ=v/λ. When the moving speed of the UE increases, the channel coherent time becomes short. For example, when the moving speed exceeds about 25 km/h at a carrier frequency of 4.5 GHz, the channel coherent time becomes less than 10 ms.

Any DL base implementation method requires enormous signaling overhead.

Therefore, the present inventors have studied AP clustering for LoS MIMO transmission, and conceived the following embodiments.

Hereinafter, embodiments according to the present disclosure will be described in detail with reference to the drawings. The radio communication method according to each of the embodiments may be applied independently, or may be applied in combination with others.

### (Various Interchangeable Replacements)

In the present disclosure, a word surrounded by "()" in a sentence may indicate a description (for example, a description of the spelling), rephrasing, a specific example, a supplementary description, or the like of the immediately preceding word. Furthermore, in the present disclosure, the meaning of the entire sentence including the words surrounded by "[]" in the sentence may be interpreted, or the meaning of the entire sentence may be interpreted without including (ignoring) the words. It should be noted that "()" and "[]" may be used in applications/meanings other than these.

In the present disclosure, "A/B" and "at least one of A or B" may be interchangeable with each other. Furthermore, in the present disclosure, "A/B/C" may mean "at least one of A, B, and C".

In the present disclosure, notify, activate, deactivate, instruct (or indicate), select, configure, update, determine, and the like may be interchangeable with each other. In the present disclosure, support, control, can control, operate, can operate, and the like may be interchangeable with each other.

In the present disclosure, radio resource control (RRC), an RRC parameter, an RRC message, a higher layer parameter, a field, an information element (IE), a configuration, and the like may be interchangeable with each other. In the present disclosure, a medium access control control element (MAC control element (CE)), an update command, an activation/deactivation command, and the like may be interchangeable with each other.

In the present disclosure, higher layer signaling may be, for example, any of radio resource control (RRC) signaling, medium access control (MAC) signaling, broadcast information, other messages (for example, a message from a core network, such as a positioning protocol (for example, NR Positioning Protocol A (NRPPa)/LTE Positioning Protocol (LPP)) message), or a combination thereof.

In the present disclosure, the MAC signaling may use, for example, the MAC control element (MAC CE), a MAC protocol data unit (PDU), or the like. The broadcast information may be, for example, a master information block (MIB), a system information block (SIB), remaining minimum system information (RMSI), other system information (OSI), or the like.

In the present disclosure, the physical layer signaling may be, for example, downlink control information (DCI), uplink control information (UCI), or the like.

In the present disclosure, ceil(x) and a ceiling function may be interchangeable with each other. In the present disclosure, floor(x), and a floor function may be interchangeable with each other. In the present disclosure, sqrt(x) and a square root may be interchangeable with each other. In the present disclosure, x mod y, mod(x,y), a mod function, and a modulo operation may be interchangeable with each other. In the present disclosure, Σ_{i=M}^{M+N-1}f(i), Σ_{i=M}^{M+N-1}fᵢ, a summation of f(i) or fᵢ over i= M, M+1,..., M+N-1, f(M)+f(M+1)+...+f(M+N-1), and f_{M}+f_{M+1}+...+f_{M+N-1} may be interchangeable with each other. C(n,k) may be interchangeable with the number of combinations for selecting k values from n values (combinatorial coefficient), the binomial coefficients, ₙCₖ, and Cₙ^{k}. In the present disclosure, x//y and floor(x/y) may be interchangeable with each other.

In the present disclosure, a_{b}, a_b, and a notation in which b is attached to the lower right of a may be interchangeable with each other. In the present disclosure, a^{c}, a^c, and a notation in which c is attached to a at the upper right may be interchangeable with each other. In the present disclosure, a_{b}^{c}, a_b^c, and a notation in which b is attached to a at the lower right and c is attached to a at the upper right may be interchangeable with each other. In the present disclosure, x^{~} may be expressed by attaching ~ over x, or may be referred to as x tilde. In the present disclosure, x⁻ may be expressed by attaching - over x, or may be referred to as x bar.

In the present disclosure, FR may be, for example, at least one of FR1, FR2, FR2-1, FR2-2, FR3, subterahertz, and terahertz. In the present disclosure, the frequency range corresponding to FR1 may be 410 to 7125 MHz. In the present disclosure, FR2 may include FR2-1 and FR2-2, a frequency range corresponding to FR2-1 may be 24250 to 52600 MHz, and a frequency range corresponding to FR2-1 may be 52600 to 71000 MHz.

In the present disclosure, the base station (BS), the gNB, and the network (NW) may be interchangeable with each other.

In the present disclosure, the DL RS, the SSB, the CSI-RS, a CMR, and a DL CMR may be interchangeable with each other.

In the present disclosure, the AP, the TRP, a point, and a panel may be interchangeable with each other. In the present disclosure, a cluster, a group, a set, the plurality of APs, and APs for CJT may be interchangeable with each other. In the present disclosure, a position, deployment, coordinates, and element for the AP/TRP/UE antenna may be interchangeable with each other.

In the present disclosure, a UE array, a plurality of antennas of the UE, UE antenna deployment, the UE antenna, and the UE panel may be interchangeable with each other.

In the present disclosure, a DAI, an indicator, an effective UE aperture, and a value inversely proportional to the size of the smallest AP cluster may be interchangeable with each other.

### (Radio Communication Method)

### <Principle of LoS MIMO>

Line-of-sight (LoS) multi-input multi-output (MIMO) supports high-rank transmission and is advantageous for LoS dominant scenarios.

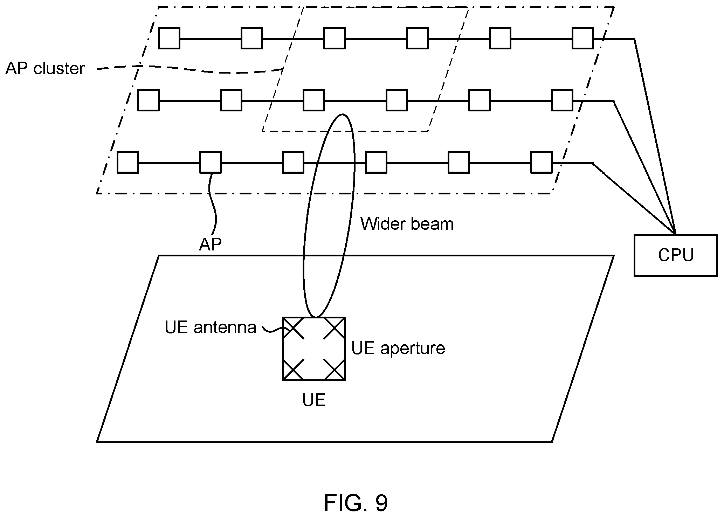

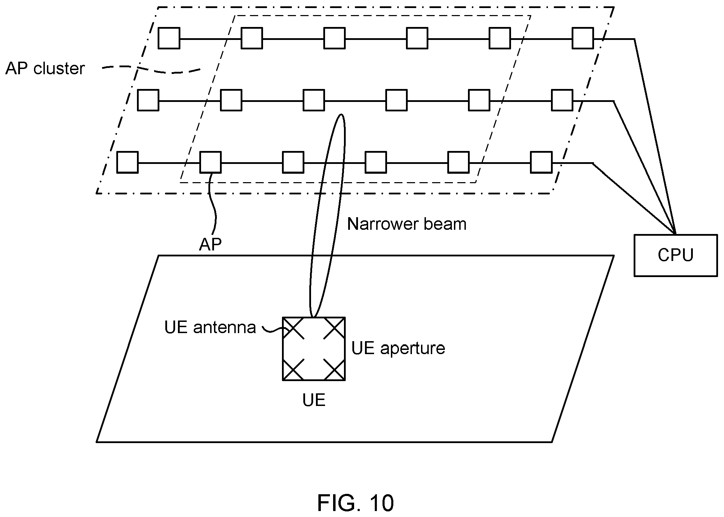

The supported rank (given by the degree of freedom) of LoS MIMO depends on a wavelength, an AP-UE distance, and apertures of the AP cluster and the UE array. Using a transmitter aperture A_{Tx}, a receiver aperture T_{Rx}, a wavelength λ, and a distance D, the depth of focus (DoF) can be approximated as A_{Tx}A_{Rx}/(λD)². As the AP cluster becomes small, a wider beam, fewer beams within a given UE aperture, and fewer spatial layers are provided (Fig. 9). As the AP cluster becomes large, a narrower beam, more beams within the given UE aperture, and more spatial layers are provided (Fig. 10).

### <AP Clustering>

When the UE array and a desired rank are given, it is conceivable to determine the smallest AP cluster for LoS MIMO transmission. However, since the effective aperture of the UE array from advantageous points of the APs ( points with good visibility) may change depending on its position, it is conceivable that the AP cluster is adapted accordingly.

In the following several embodiments, the following several key techniques are studied.
◆ Key technique 1: A channel parameter may be introduced to characterize a UE position (and the effective aperture) and determine the smallest AP cluster. The channel parameter may be a distance-aperture indicator (DAI).
◆ Key technique 2: A low overhead DAI acquisition method based on DL RS measurements from a few APs may be designed.

Schemes of several embodiments can provide a throughput gain of 20 to 60% compared to existing schemes at SNR=15 dB. Although the schemes of the several embodiments only need to measure the channels of two to four APs, the existing schemes need to measure the channels of all APs.

The several embodiments relate to DL RS transmission and reporting. The DL RS may be, for example, a beamformed (BF) CSI-RS or an SSB.

### <Key Technique 1>

The DAIs may reflect the effective aperture of the UE array from the advantageous points of the APs. The smallest AP cluster may be derived from the DAIs. A smaller DAI may mean a smaller effective UE aperture. A smaller AP cluster may be required to achieve the desired rank (higher rank).

The DAI may be in accordance with the following several characteristics.

### ◆ Definition of DAI

For linear AP deployment and linear UE array, the DAI may be defined by the following formula E11. ${θ}_{ux} = \frac{{d}_{u} {d}_{x} u {*}^{T} Px}{{λD}_{LOS}}$ (E11)

Here, dᵤ may be a UE antenna spacing. dx may be an AP spacing. u may be a vector indicating the direction of the UE antenna. P may be a vector indicating the LoS direction. x may be a vector indicating the direction of the AP deployment. DL_{OS} may be a LoS distance.

For two-dimensional (2D) AP deployment and 2D UE array, the DAI may be defined by the following formula E12. $θ = \left[\begin{matrix}{θ}_{ux} & {θ}_{uy} \\ {θ}_{vx} & {θ}_{vy}\end{matrix}\right] = \left[\begin{matrix}\frac{{d}_{u} {d}_{x} {u}^{∗ T} Px}{{λD}_{LOS}} & \frac{{d}_{v} {d}_{x} u {*}^{T} Px}{{λD}_{LOS}} \\ \frac{{d}_{u} {d}_{y} u {*}^{T} Py}{{λD}_{LOS}} & \frac{{d}_{v} {d}_{y} u {*}^{T} Py}{{λD}_{LOS}}\end{matrix}\right]$ (E12)

u and v may be vectors indicating the direction of the UE antenna. x and y may be vectors indicating the direction of the AP deployment.
◆ Application of DAI: The DAI may be used to derive the smallest AP cluster according to the following several characteristics.
   - **◆** The smallest AP cluster (the size of the smallest AP cluster) may be inversely proportional to the DAI. Details are described in Supplement below.
   - **◆** The AP cluster including the smallest AP cluster may be scheduled for data transmission/CJT (using LoS MIMO).

### <Key Technique 2>

The DAIs may be several parameters of LoS MIMO channels. The parameters may be estimated based on measurements of the DL RSs transmitted from only a few APs.

The single DAI may be estimated from a virtual 2x2 MIMO channel between 2AP and 2UE antennas. Other DAIs may be estimated in the same manner.

Each AP may transmit a (beamformed) DL RS for DAI estimation.

A phase of a LoS MIMO channel matrix may be given by the following formula E13. $\begin{matrix}∠ {H}_{LOS} = - \frac{2 π}{λ} {D}_{LOS} + \left[\begin{matrix}{φ}_{Rx}^{\left(1\right)} + {φ}_{Tx}^{\left(1\right)} & {φ}_{Rx}^{\left(1\right)} + {φ}_{Tx}^{\left(2\right)} \\ {φ}_{Rx}^{\left(2\right)} + {φ}_{Tx}^{\left(1\right)} & {φ}_{Rx}^{\left(2\right)} + {φ}_{Tx}^{\left(2\right)} + 2 π \frac{{d}_{x} {d}_{u}}{{λD}_{LOS}} u {*}^{T} Px\end{matrix}\right] \\ \frac{{d}_{x} {d}_{u}}{{λD}_{LOS}} u {*}^{T} Px = \frac{1}{2 π} \left(∠{\hat{h}}_{LOS , 22}+∠{\hat{h}}_{LOS , 11}-∠{\hat{h}}_{LOS , 21}-∠{\hat{h}}_{LOS , 12}\right)\end{matrix}$ (E13)

Here, 2π/λ · D_{LOS} is a phase of a propagation delay. φ_{Rx}⁽ⁱ⁾ +φ_{Tx}^{(j)} is a near-field (NF) steering vector. dᵤdₓu*^{T}Px/λD_{LOS} may depend on the location and attitude of the UE related to AP clustering and may be estimated by a maximum likelihood (ML) estimator.

### <AP Clustering Procedure>

The UE may measure the DL RSs transmitted from only the few APs based on the AP cluster determined and reported to the gNB for CJT.

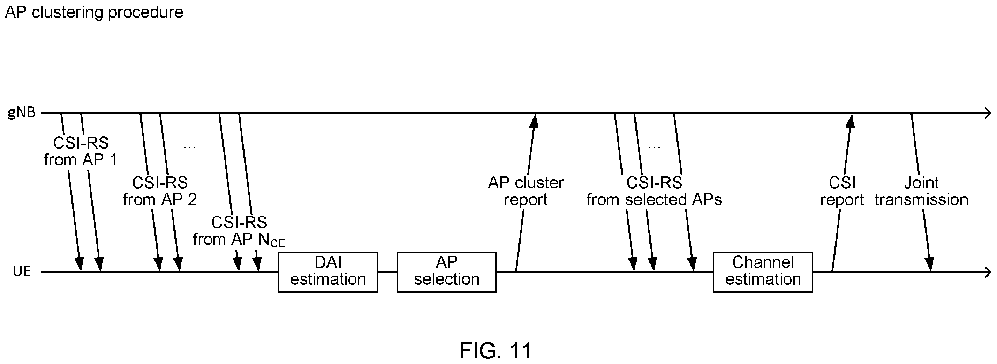

As in the example of Fig. 11, the gNB may transmit each of the plurality of CSI-RSs from the plurality of APs. The UE may estimate the DAI based on the CSI-RSs (DAI estimation, key technique 2), select some APs (cluster) of the plurality of APs (AP selection, key technique 1), and report the plurality of selected APs (cluster). The gNB may transmit the plurality of CSI-RSs from the plurality of selected APs. The UE may perform channel estimation based on the plurality of CSI-RSs, and report a result as a CSI report. The gNB may determine APs for CJT based on the report, and perform CJT by using the determined APs.

This AP clustering procedure provides a throughput gain of approximately 30 to 60% compared to a reference scheme at SNR=15dB.

While the reference scheme needs to measure channels of all the APs (for example, 225 APs in a simulated scenario), this AP clustering procedure only needs to measure channels of two to four APs. Throughput performance is compared at the same received SNR to eliminate the effect of different numbers of APs.

### <First Embodiment>

The present embodiment relates to DL RS transmission.

A set of DL channel measurement resources (CMRs) may be configured to be transmitted by APs/TRPs with N_{AP} ≥ 2. The CMRs may be, for example, a CSI-RS. The APs/TRPs with N_{AP} ≥ 2 may be scheduled to span a deployment region of the APs/TRPs, and the UE may be notified of a correspondence between the configured set of the CMRs and the scheduled APs/TRPs according to one of three types indicated by the higher layer parameter. The transmission of the configured set of the CMRs may be completed within a given duration (associated with the channel coherent time) defined by the higher layer parameter.

The UE may follow the following procedure to find from which AP the CMR is being transmitted.
- ◆ The plurality of CMRs may be set and multiplexed in time (for example, CMR#0 may mean CSI-RS resource index #0 or the like), frequency, or code (for example, CMR#0 and #1 may mean two ports).
- ◆ The CMRs may be mapped to different APs in a certain order, and the mapping may be informed to the UE. For example, three APs may be scheduled, and the UE may know:
   --◆ The APs are deployed not at random or in other shapes, but on a line.
   --◆ CMR#0/#1/#2 are transmitted from the first/second/third APs, respectively.

The three types may be the following.

### ◆ Type 1: N_{AP} APs/TRPs form a line uniformly.

The CMRs may be mapped to the APs/TRPs in a continuous order or in any other defined order. The UE may not need to be informed of the exact positions of the scheduled APs/TRPs.

In the example of the following figures, the APs are deployed on a two-dimensional (2D) grid represented by coordinates (x, y).

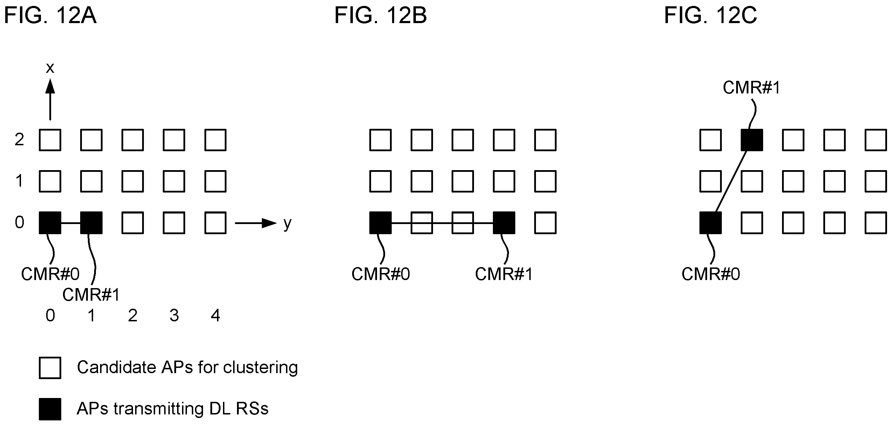

Figs. 12A to 12C illustrate several examples of mapping of the CMRs to the APs/TRPs with N_{AP}=2 in type 1. In the example of Fig. 12A, CMR#0 is mapped to AP (0,0), and CMR#1 is mapped to AP (1,0). In the example of Fig. 12B, CMR#0 is mapped to AP (0,0), and CMR#1 is mapped to AP (3,0). In the example of Fig. 12C, CMR#0 is mapped to AP (0,0), and CMR#1 is mapped to AP (1,2).

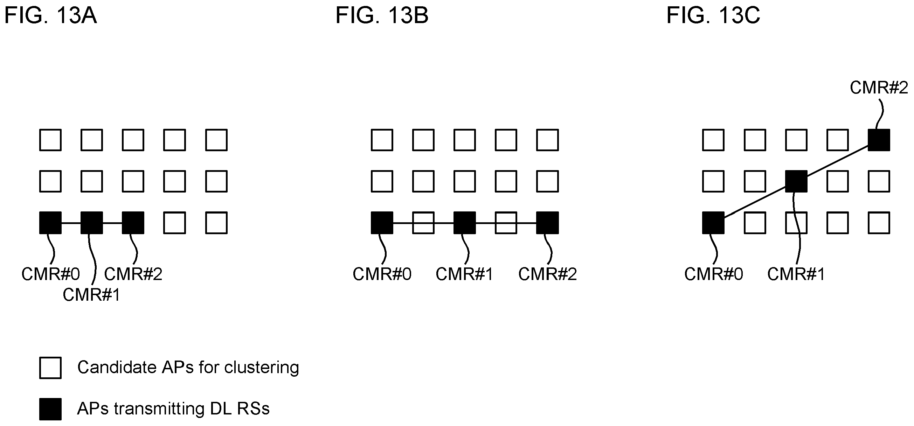

Figs. 13A to 13C illustrate several examples of mapping of the CMRs to the APs/TRPs with N_{AP}>2 in type 1. In the example of Fig. 13A, CMR#0 is mapped to AP (0,0), CMR#1 is mapped to AP (1,0), and CMR#2 is mapped to AP (2,0). In the example of Fig. 13B, CMR#0 is mapped to AP (0,0), CMR#1 is mapped to AP (2,0), and CMR#2 is mapped to AP (4,0). In the example of Fig. 13C, CMR#0 is mapped to AP (0,0), CMR#1 is mapped to AP (2,1), and CMR#2 is mapped to AP (4,2).
◆ Type 2: The N_{AP} APs/TRPs form two non-parallel lines uniformly regardless of whether there are common APs/TRPs.

The CMRs may be mapped to the APs/TRPs in a defined order. For example, the CMRs are first mapped to the APs/TRPs forming one line and then to the APs/TRPs forming the other line.

If the two lines have a common AP/TRP, at least one of the following several options may be followed.
- ◆ Option 1: CMR#0 may be mapped to a common AP/TRP.
- ◆ Option 2: The common AP/TRP may be used twice and may not be distinguished from other APs/TRPs.

The UE may not need to be informed of the exact positions of the scheduled APs/TRPs.

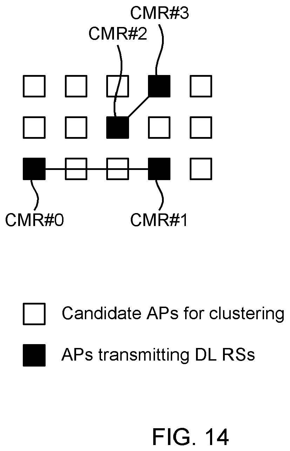

Fig. 14 illustrates several examples of mapping of CMRs not using the common AP/TRP in type 2. In this example, CMR#0 is mapped to AP (0,0), CMR#1 is mapped to AP (3,0), CMR#2 is mapped to AP (2,1), and CMR#3 is mapped to AP (3,2). The UE may know the following several pieces of information (several information).
- ◆ Type 2: The APs form two lines.
- ◆ The two APs form the first line. That is, CMR#0 and CMR#1.
- ◆ The two APs form the second line. That is, CMR#2 and CMR#3.

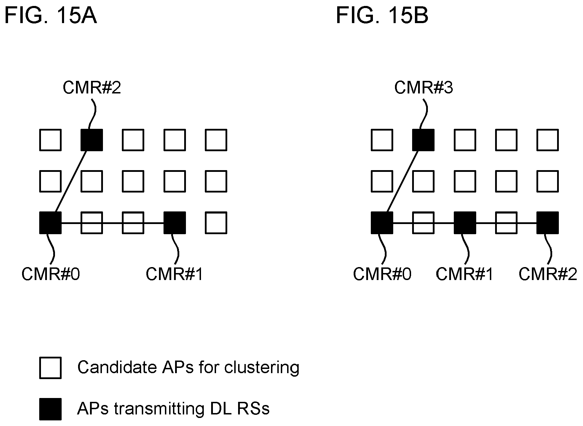

Figs. 15A and 15B illustrate several examples of option 1 using the common AP/TRP in type 2. In the example of Fig. 15A, CMR#0 is mapped to AP (0,0), CMR#1 is mapped to AP (3,0), and CMR#2 is mapped to AP (1,2). In the example of Fig. 15B, CMR#0 is mapped to AP (0,0), CMR#1 is mapped to AP (2,0), CMR#2 is mapped to AP (4,0), and CMR#3 is mapped to AP (1,2). The UE may know the following several pieces of information.
- ◆ Type 2: The APs form two lines.
- ◆ The two lines intersect at the AP transmitting CMR#0.
- ◆ The two APs form the first line. That is, CMR#0 and CMR#1.
- ◆ The two APs form the second line. That is, CMR#0 and CMR#3.

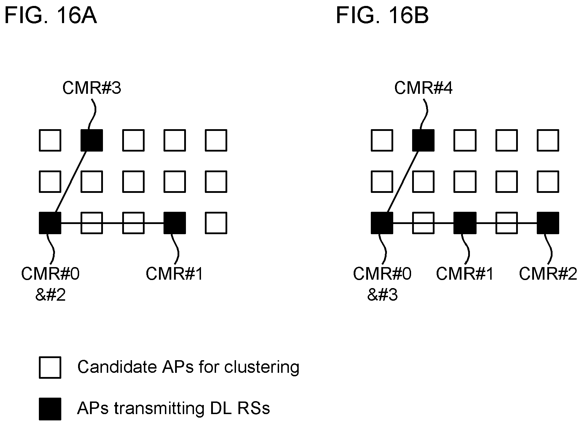

Figs. 16A and 16B illustrate several examples of option 1 using the common AP/TRP in type 2. In the example of Fig. 16A, CMR#0 and #2 are mapped to AP (0,0), CMR#1 is mapped to AP (3,0), and CMR#3 is mapped to AP (1,2). In the example of Fig. 16B, CMR#0 and #3 are mapped to AP (0,0), CMR#1 is mapped to AP (2,0), CMR#2 is mapped to AP (4,0), and CMR#4 is mapped to AP (1,2). The UE may know the following several pieces of information.
- ◆ Type 2: The APs form two lines.
- ◆ The two APs form the first line. That is, CMR#0 and CMR#1.
- ◆ The two APs form the second line. That is, CMR#2 and CMR#3.

With this indication, the UE does not need to know whether there is the common AP. More CMRs need to be set.
◆ Type 3: The N_{AP} APs/TRPs form a uniform rectangle/parallelogram.

The CMRs may be mapped to the APs/TRPs in a defined order.

The UE may not need to be informed of the exact positions of the scheduled APs/TRPs.

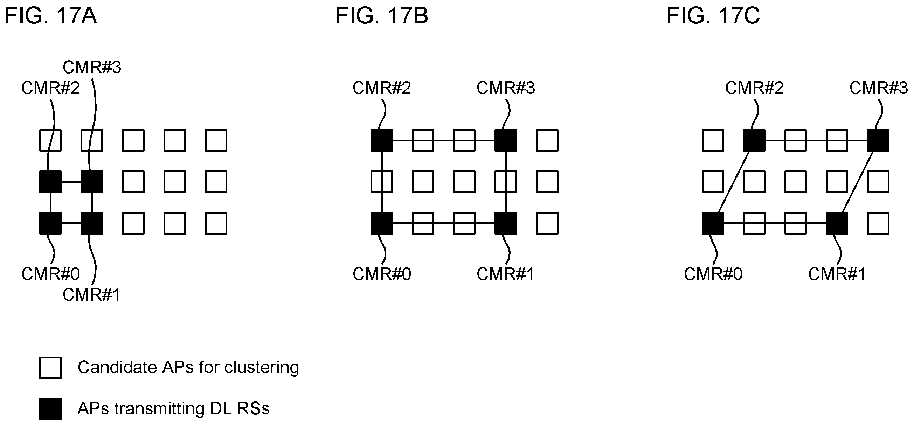

Figs. 17A to 17C illustrate several examples of mapping of four CMRs to four APs/TRPs in type 3. In the example of Fig. 17A, CMR#0 is mapped to AP (0,0), CMR#1 is mapped to AP (1,0), CMR#2 is mapped to AP (0,1), and CMR#3 is mapped to AP (1,1). In the example of Fig. 17B, CMR#0 is mapped to AP (0,0), CMR#1 is mapped to AP (3,0), CMR#2 is mapped to AP (0,2), and CMR#3 is mapped to AP (3,2). In the example of Fig. 17C, CMR#0 is mapped to AP (0,0), CMR#1 is mapped to AP (3,0), CMR#2 is mapped to AP (1,2), and CMR#3 is mapped to AP (4,2).

The CMR-AP/TRP relationship may be set semi-statically or fixed.

The same QCL/TCI state may be applied to the same CMR.

According to the first embodiment, the UE can appropriately find which AP/TRP the CMR/DL RS corresponds to (from which AP/TRP it is transmitted).

### <Second Embodiment>

The present embodiment relates to reporting related to AP clustering.

### <<Embodiment 2-1>>

The UE may derive the AP cluster from the measurements of the DL CMRs set using the first embodiment and report (k₁, k₂) indicating the AP cluster.

The UE may be configured to report only k₁. In this case, k₁ may indicate the diameter of the circle of that AP cluster.

In a case where the UE reports both k₁ and k₂, k₁ and k₂ may indicate the lengths of two sides (long and short sides) of the rectangle/parallelogram of that AP cluster.

The reported (k₁, k₂) may be derived based on a higher layer parameter (d₁, d₂) related to the position of the APs/TRPs transmitting the DL CMRs. d1 and d₂ may be defined to indicate a normalized distance between two adjacent APs/TRPs in each direction/dimension.

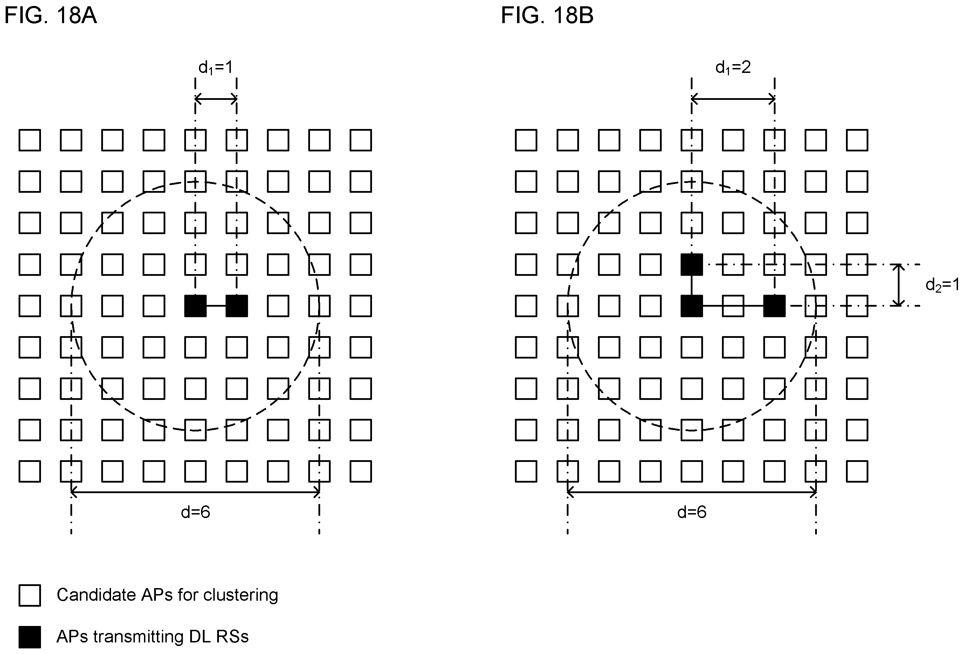

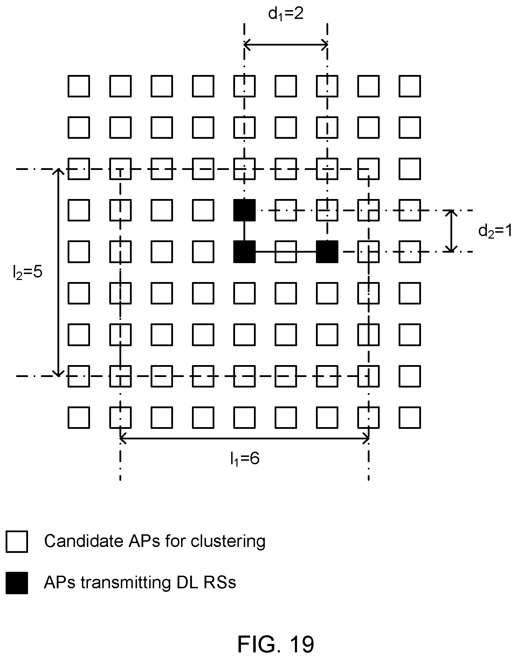

The UE may be informed of the permitted maximum value of the report of (k₁, k₂). The maximum value may be related to the total number of APs/TRPs available to be scheduled for that UE. For example, as in the following examples, the available APs/TRPs may be an array of 9 x 9 APs/TRPs. In the example of Fig. 18A, the distance between the APs/TRPs is d₁=1(or 6), the desired diameter of the circle is 6, and the UE may report k₁= diameter/d₁=6. In the example of Fig. 18B, the distances between the APs/TRPs in two directions are d₁=2 and d₂=1, the desired diameter of the circle is 6, and the UE may report k₁= diameter/d₁=3. In the example of Fig. 19, the distances between the APs/TRPs in two directions are d₁=2 and d₂=1, the lengths of the desired two sides of the rectangle are l₁=6 and l₂=5, and the UE may report k₁=l₁/d₁=3 and k₂=l₂/d₂=5.

### <<Embodiment 2-2>>

Instead of Embodiment 2-1, the UE may explicitly report a channel parameter required for AP clustering.

The report content may be a subset of the four parameters θᵤₓ, θᵥₓ, θ_{uy}, and θ_{vy} in the above-described formula E12 dependent on the setting.

The report volume/quantity may be quantized by b bits.

In this case, AP clustering may be expected/assumed to be performed by the gNB based on the reported parameters θᵤₓ, θᵥₓ, θ_{uy}, and θ_{vy}.

### <<Embodiment 2-3>>

In the AP clustering report as in Embodiment 2-1 or Embodiment 2-2, the ID of the corresponding DL CMR may also be reported.

### <<Embodiment 2-4>>

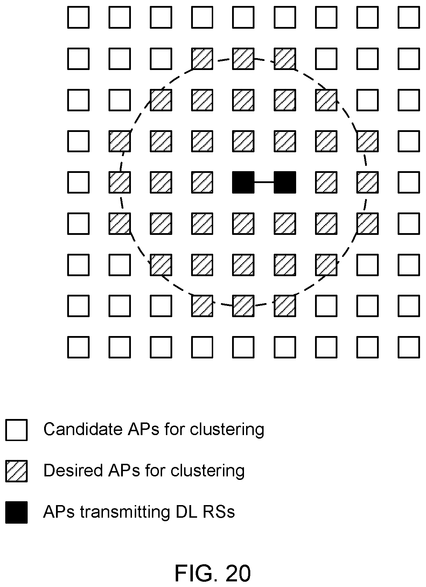

The UE may be informed of/configured with the indexes of all candidate APs/TRPs semi-statically (via an RRC IE), and may report the indexes of desired APs/TRPs (desired APs) (for clustering) (Fig. 20).

Variation 1: A set of the indexes of the AP/TRP may be set. Each AP/TRP index may correspond to a single candidate AP/TRP.

Variation 2: A set of CMRs may be set. Each CMR index (for example, CRI) may correspond to the single candidate AP/TRP. In this case, not all the set CMRs need to be transmitted.

According to the second embodiment, the UE can appropriately perform reporting related to AP clustering. The gNB can appropriately perform AP clustering based on the report.

### <Supplement>

### <<LoS MIMO Channel>>

The spatial correlation of LoS channels of the plurality of APs that are densely deployed needs to be addressed first.

An NF LoS MIMO channel H_{LOS} can be approximately decomposed into a Tx-side NF steering vector, a two-dimensional (2D) Fourier transform, and an Rx-side NF steering vector as in the following formula E21. ${H}_{LOS} ≅ \sqrt{β} {e}^{- j \frac{2 π}{λ} {D}_{LOS}} ⋅ diag \left({α}_{Rx}\right) ⋅ {F}_{2 D} ⋅ diag \left({α}_{Tx}\right)$ (E21)

Here, β may represent path loss. D_{LOS} may represent a propagation delay. α_{Rx} may represent the Rx-side NF steering (beamforming) vector. F_{2D} may represent the 2D Fourier transform. α_{Tx} may represent the Tx-side NF steering (beamforming) vector.

Sampling characteristics of the 2D Fourier transform can be used.

The set of APs focused on the aperture of the UE functions as a focused lens. Such a system can be described by a Fourier transform as studied in Fourier optics.

The Nyquist sampling criteria can be extended to 2D signals.

### <Key Technique 1: AP Clustering>

The Nyquist sampling criteria can be used to derive a preferred AP spacing and AP cluster based on a given UE antenna spacing and UE array geometry for efficient LoS MIMO transmission. The AP spacing, the AP cluster, the UE antenna spacing, and the UE array geometry are similar to a sampling period, a window function, subcarrier spacing, and an anti-aliasing filter, respectively.

In the present disclosure, the AP spacing, the period, and the wavelength may be interchangeable with each other. In the present disclosure, an AP density, a frequency, and a spatial frequency may be interchangeable with each other. In the present disclosure, the UE antenna spacing, the period, and the wavelength may be interchangeable with each other. In the present disclosure, a UE antenna density, the frequency, and the spatial frequency may be interchangeable with each other.

An appropriate AP spacing ensures that no spatial aliasing occurs on the UE array. In a case where the AP spacing (sampling period) in two dimensions is (dₓ, d_{y}), an ideal AP spacing (Nyquist sampling spacing) in two dimensions is (λD_{LOS}/dₓ, λD_{LOS}/d_{y}). The ideal AP spacing does not cause spatial aliasing and is most efficient. An AP spacing smaller than the ideal AP spacing does not cause spatial aliasing. An AP spacing larger than the ideal AP spacing causes spatial aliasing and degrades performance.

Appropriate AP clustering ensures that a plurality of spatial layers are resolved by the UE array. In a case where the UE antenna spacing (subcarrier spacing) in two dimensions is (dᵤ, dᵥ), the size of an ideal region for ideal AP clustering in two dimensions is (λD_{LOS}/dᵤ, λD_{LOS}/dᵥ). Ideal AP clustering deploys APs so as to fill the ideal region. Ideal AP clustering can use the maximum rank without causing inter-symbol interference (ISI). Sufficient AP clustering that selects APs within a region including the ideal region causes weak ISI and can use the maximum rank. Insufficient AP clustering that selects APs within a region included in the ideal region causes strong ISI and has an insufficient rank.

### <<Key Technique 2: Channel Parameter Estimation>>

The AP clustering method in the present disclosure may require information related to the position and posture (array direction) of the UE, the AP deployment, and the UE array deployment. The information may be conveyed from several channel parameters that can be estimated based on the measurements of the DL RSs transmitted from several APs.

### <<Channel Model>>

In the present disclosure, at least one of the following several features may be assumed.
◆ Uniform AP deployment within a 2D grid (first 2D grid)
◆ Uniform UE array within a 2D grid (second 2D grid)
◆ LoS path exists between the UE and all the APs.

The channel model in the present disclosure may use at least one of the following several features.
◆ A projection matrix in the following formula E31. $P = I - {n}_{LOS} {{n}_{LOS}}^{T}$ (E31)
◆ An LoS channel matrix H_{LOS} (based on the Fresnel approximation) in the following formulas E32 and E33. $\begin{matrix}{α}_{Rx} \left({r}_{i , j}\right) = exp \left(j\frac{2 π}{λ}\left({{n}_{LOS}}^{T}{r}_{i , j}-\frac{{{r}_{i , j}}^{∗ T} {Pr}_{i , j}}{2 {D}_{LOS}}\right)\right) \\ {α}_{Τx} \left({t}_{m , n}\right) = exp \left(j\frac{2 π}{λ}\left({{n}_{LOS}}^{T}{t}_{m , n}-\frac{{{t}_{m , n}}^{∗ T} {Pt}_{m , n}}{2 {D}_{LOS}}\right)\right) \\ {F}_{2 D} = exp \left(j\frac{2 π}{λ}\frac{{{r}_{i , j}}^{∗ T} {Pt}_{m , n}}{{D}_{LOS}}\right) \\ = exp \left(j\frac{2 π}{λ}\left(\begin{matrix}{md}_{x} {id}_{u} {u}^{∗ T} Px + {md}_{x} {jd}_{v} {v}^{∗ T} Px \\ + {nd}_{x} {id}_{u} {u}^{∗ T} Py + {nd}_{x} {jd}_{v} {v}^{∗ T} Py\end{matrix}\right)\right)\end{matrix}$ (E32) $\begin{matrix}{t}_{m , n} = {md}_{x} ⋅ x + {nd}_{y} ⋅ y \\ m = 0 , 1 , … , {N}_{x} - 1 \\ n = 0 , 1 , … , {N}_{y} - 1 \\ {r}_{i , j} = {id}_{u} ⋅ u + {jd}_{v} ⋅ v \\ i = 0 , 1 , … , {M}_{u} - 1 \\ j = 0 , 1 , … , {M}_{v} - 1\end{matrix}$ (E33)

A vector from the AP deployment to the UE array may be represented by D_{LOS}n_{LOS}.

### <<AP Spacing>>

Whether spatial aliasing occurs can be geometrically tested as follows:
◆ The DAI for the 2D AP deployment and the 2D UE array may be represented by the above-described θ.
◆ The period of spectral replicas (spectral replication) of the UE array attributed to uniform AP deployment may be characterized by the following formula E41. $\left[{r}_{1} {r}_{2}\right] = \left[{d}_{u}⋅u {d}_{v}⋅v\right] {\left({θ}^{- 1}\right)}^{T}$ (E41)

That is, the period may be given by the following formula E42. $\begin{matrix}{r}_{1} = \frac{{θ}_{vy} {d}_{u}}{det \left(θ\right)} ⋅ u + \frac{{θ}_{uy} {d}_{v}}{det \left(θ\right)} ⋅ v , \\ {r}_{2} = \frac{{θ}_{vx} {d}_{u}}{det \left(θ\right)} ⋅ u + \frac{{θ}_{ux} {d}_{v}}{det \left(θ\right)} ⋅ v\end{matrix}$ (E42)
◆ An aperture D_{UE} of the UE array may be defined by the following formula E43. ${D}_{UE} = max \left(\left‖{M}_{v}{d}_{v}v+{M}_{u}{d}_{u}u\right‖ \left‖{M}_{v}{d}_{v}v-{M}_{u}{d}_{u}u\right‖\right)$ (E43)

Mᵤ and Mᵥ may be scaling parameters.
◆ λ may represent the shortest vector length in the grid of the spectral replica.
◆ When λ ≥ 2D_{UE}, the AP spacing is appropriate in that no spatial aliasing occurs on the UE array.

### <<AP Clustering>>

Appropriate AP clustering for LoS MIMO transmission may be derived by the following method as with the AP spacing.
◆ The DAI for the 2D AP deployment and the 2D UE array may be represented by the above-described θ.
◆ Ideal AP clustering can be calculated by a format consisting of two parts of the period of the spectral replica as in the following equation E51. $\left[{a}_{1} {a}_{2}\right] = \left[{d}_{x}⋅x {d}_{y}⋅y\right] {\left(θ\right)}^{- 1}$ (E51)
◆ The case of an insufficient rank may be represented as follows.
   - ◆ Lᵤ and Lᵥ may represent a desired rank in two dimensions of the UE array.
   - ◆ In AP clustering, Lᵤ and Lᵥ may be changed to Lᵤ/Mᵤ and Lᵥ/Mᵥ, respectively, depending on the scaling parameters Mᵤ and Mᵥ.

### <<Notification of Information to UE>>

Notification of any information [from the Network (NW) (for example, the Base Station (BS))] to the UE (in other words, reception of any information from the BS by the UE) in the embodiments may be performed using physical layer signaling (for example, DCI), higher layer signaling (for example, RRC signaling, a MAC CE), a certain signal/channel (for example, a PDCCH, a PDSCH, or a reference signal), or a combination thereof.

In a case where notification is performed by the MAC CE, the MAC CE may be identified by including, in a MAC subheader, a new logical channel ID (LCID) not defined in existing standards.

In a case where the notification is performed using DCI, the notification may be performed by a certain field of the DCI, a radio network temporary identifier (RNTI) used for scrambling of cyclic redundancy check (CRC) bits added to the DCI, a format of the DCI, or the like.

In addition, the notification of any information to the UE in the above-described embodiments may be performed periodically, semi-persistently, or aperiodically.

### <<Notification of Information from UE>>

Notification of any information from the UE [to the NW] (in other words, transmission/reporting of any information to the BS by the UE) in the embodiments may be performed using physical layer signaling (for example, UCI), higher layer signaling (for example, RRC signaling, a MAC CE), a certain signal/channel (for example, a PUCCH, a PUSCH, a PRACH, or a reference signal), or a combination thereof.

In a case where the notification is performed by the MAC CE, the MAC CE may be identified by including, in a MAC subheader, a new LCID not defined in existing standards.

In a case where notification is performed by the UCI, the notification may be transmitted using the PUCCH or PUSCH.

In addition, the notification of any information from the UE in the above-described embodiments may be performed periodically, semi-persistently, or aperiodically.

### <<Regarding Application of Each Embodiment>>

In the UE/BS, certain (one or a plurality of) processing/operation/control/assumption/information for at least one of the above-described embodiments may be applied (or employed) in a case where any one or a plurality of the following conditions are satisfied:
· a higher layer parameter indicating the certain processing/operation/control/assumption/information is configured;
· the certain processing/operation/control/assumption/information is determined based on the associated higher layer parameter;
· the certain processing/operation/control/assumption/information is specified/activated/triggered by the MAC CE/DCI/UCI/resource/channel/RS;
· certain UE capability indicating (or relating to) the certain processing/operation/control/assumption/information is reported or supported; and
· the application of the certain processing/operation/control/assumption/information is determined based on certain conditions.

The certain UE capability may indicate at least one of the following:
· supporting the certain processing/operation/control/assumptions/information,
· a capability of each embodiment.
· a capability of each option in each embodiment, or a capability of a combination of a plurality of options in each embodiment.
· a capability of each choice in each embodiment, or a capability of a combination of a plurality of choices in each embodiment.

Furthermore, the certain UE capability may be a capability applied over all the frequencies (in common irrespective of frequency), may be a capability for each frequency (for example, one of a cell, a band, a band combination, a BWP, a component carrier, and the like or a combination thereof), may be a capability for each frequency range (for example, frequency range 1 (FR1), FR2, FR3, FR4, FR5, FR2-1, and FR2-2), may be a capability for each subcarrier spacing (SCS), or may be a capability for each feature set (FS) or feature set per component-carrier (FSPC).

In addition, the certain UE capability may be capability applied across all the duplex schemes (in common irrespective of duplex scheme) or may be capability for each duplex scheme (for example, time division duplex (TDD) and frequency division duplex (FDD)).

The UE/BS may follow the operation defined in the existing 3GPP release if the above-described condition is not satisfied.

### (Supplementary Notes)

Regarding an embodiment of the present disclosure, the following supplementary notes of the invention will be given.

### [Supplementary Note 1]

A terminal including:
a receiving section that receives a setting related to a plurality of downlink reference signals and a plurality of points for transmission and receives the plurality of downlink reference signals; and
a control section that determines a cluster that is a part of the plurality of points based on a result of reception of the plurality of downlink reference signals, the setting, and information related to deployment of a plurality of antennas of the terminal, and controls transmission of a report related to the cluster and reception of a signal from the cluster.

### [Supplementary Note 2]

The terminal according to Supplementary Note 1, wherein the setting indicates a relationship between the plurality of downlink reference signals and the plurality of points.

### [Supplementary Note 3]

The terminal according to Supplementary Note 1 or 2, wherein the signal is transmitted from the cluster by coherent joint transmission (CJT).

### [Supplementary Note 4]

The terminal according to any one of Supplementary Notes 1 to 3, wherein the plurality of points are deployed within a first two-dimensional grid, and the plurality of antennas are deployed within a second two-dimensional grid.

### (Radio Communication System)

Hereinafter, a configuration of a radio communication system according to an embodiment of the present disclosure will be described. In this radio communication system, communication is performed using any one of the radio communication methods according to the embodiments of the present disclosure or a combination thereof.

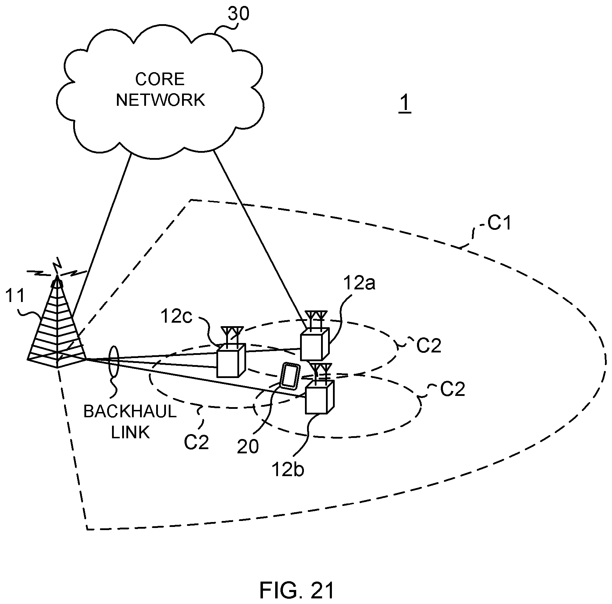

Fig. 21 is a diagram illustrating an example of a schematic configuration of the radio communication system according to one embodiment. A radio communication system 1 (which may be simply referred to as a system 1) may be a system that implements communication using long term evolution (LTE), 5th generation mobile communication system New Radio (5G NR), and the like defined by third generation partnership project (3GPP).

Further, the radio communication system 1 may support dual connectivity between multiple radio access technologies (RATs) (Multi-RAT Dual Connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both the MN and the SN are NR base stations (gNB) (NR-NR dual connectivity (NN-DC))).

The radio communication system 1 may include a base station 11 that forms a macro cell C1 having a relatively wide coverage, and base stations 12 (12a to 12c) that are arranged in the macro cell C1 and form a small cell C2 narrower than the macro cell C1. A user terminal 20 may be positioned in at least one cell. The deployment, number, shape, size, and the like of cells and the user terminals 20 are not limited to the aspects illustrated in the drawings. Hereinafter, the base stations 11 and 12 will be collectively referred to as a "base station 10" in a case where the base stations 11 and 12 are not distinguished from each other.

Note that the radio communication system 1 may use Multi Input Multi Output (MIMO). For example, one cell may be formed by one antenna/base station 10, or may be formed by a plurality of antennas/base stations 10. One [virtual] cell (for example, it may be referred to as a super cell) may be configured by a plurality of [virtual] cells (for example, it may be referred to as a sub-cell). The super cell may correspond to a cell whose physical range is fixed, and the sub-cell may correspond to a cell whose physical range varies semi-statically/dynamically. In this case, the radio communication system 1 may be referred to as a cell-free system.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). It is noted that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) and frequency division duplex (FDD).

The plurality of base stations 10 may be connected to each other in a wired manner (for example, an optical fiber in compliance with common public radio interface (CPRI), an X2/Xn interface, or the like) or in a radio manner (for example, NR communication). For example, in a case where NR communication is used as a backhaul between the base stations 11 and 12, the base station 11 corresponding to an upper node may be referred to as an Integrated Access Backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The core network 30 may include, for example, network functions (NFs) such as a user plane function (UPF), an access and mobility management function (AMF), a session management function (SMF), a unified data management (UDM), an application function (AF), a data network (DN), a location management function (LMF), or an operation, administration and maintenance (management) (OAM). Note that a plurality of functions may be provided by one network node. In addition, communication with an external network (for example, the Internet) may be performed via the DN.

The user terminal 20 may be a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. It is noted that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), or the like may be used as downlink channels.

Furthermore, in the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. The user data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

It is noted that the DCI that schedules the PDSCH may be referred to as DL assignment, DL DCI, or the like, and the DCI that schedules PUSCH may be referred to as UL grant, UL DCI, or the like. It is noted that the PDSCH may be interchangeable with DL data, and the PUSCH may be interchangeable with UL data.

For detection of the PDCCH, a control resource set (CORESET) and a search space may be used. The CORESET corresponds to a resource for searching for DCI. The search space corresponds to a search area and a search method for PDCCH candidates. One CORESET may be associated with one or more search spaces. The UE may monitor a CORESET associated with a certain search space based on a search space configuration.

One search space may correspond to a PDCCH candidate corresponding to one or more aggregation levels. One or more search spaces may be referred to as a search space set. It is noted that "search space", "search space set", "search space configuration", "search space set configuration", "CORESET", "CORESET configuration", and the like in the present disclosure may be interchangeable with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), and scheduling request (SR) may be transmitted on the PUCCH. A random access preamble for establishing a connection with a cell may be transmitted on the PRACH.

It is noted that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) and a secondary synchronization signal (SSS). A signal block including the SS (PSS, SSS) and the PBCH (and the DMRS for the PBCH) may be referred to as an SS/PBCH block, an SS block (SSB), or the like. It is noted that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). It is noted that DMRSs may be referred to as "user terminal-specific reference signals (UE-specific reference signals)".

### (Base Station)

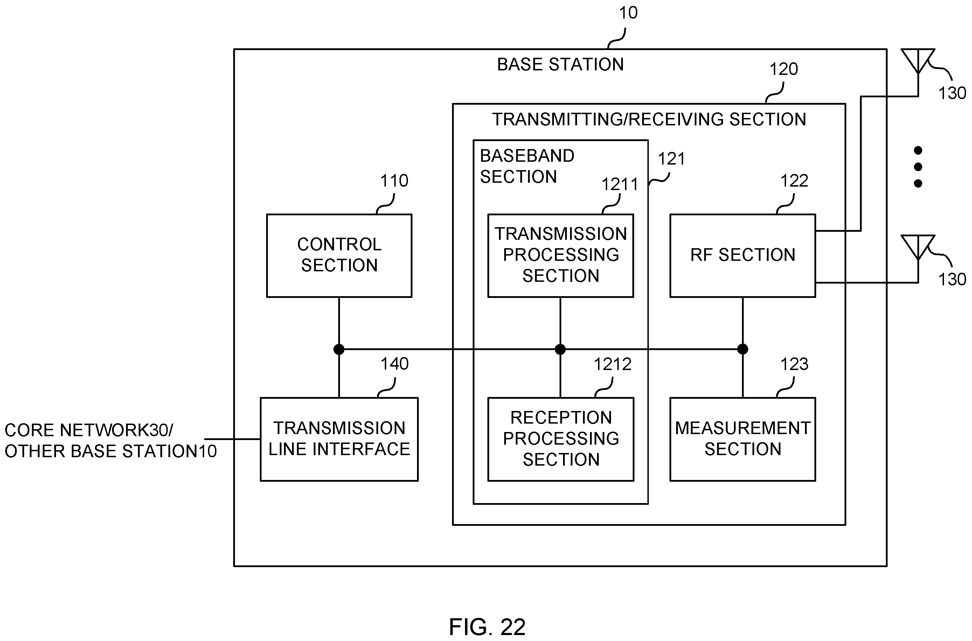

Fig. 22 is a diagram illustrating an example of a configuration of the base station according to one embodiment. The base station 10 includes a control section 110, a transmitting/receiving section 120, a transmitting/receiving antenna 130, and a transmission line interface 140. It is noted that one or more of the control sections 110, one or more of the transmitting/receiving sections 120, one or more of the transmitting/receiving antennas 130, and one or more of the transmission line interfaces 140 may be included.

It is noted that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can include a controller, a control circuit, or the like, which is described based on common recognition in a technical field according to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a baseband circuit, a filter, a phase shifter, a measurement circuit, a transmitting/receiving circuit, and the like described on the basis of common general knowledge in the technical field according to the present disclosure.

The transmitting/receiving section 120 may be configured as an integrated transmitting/receiving section, or may be configured as a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include an antenna, for example, an array antenna, or the like, which is described based on common recognition in a technical field according to the present disclosure.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-to-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply, to the acquired baseband signal, reception processing such as analog-to-digital conversion, fast Fourier transform (FFT) processing, inverse discrete Fourier transform (IDFT) processing (as necessary), filtering processing, demapping, demodulation, decoding (which may include error correction decoding), MAC layer processing, RLC layer processing, and PDCP layer processing, and may acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. A measurement result may be output to the control section 110.

The transmission line interface 140 may transmit/receive a signal (backhaul signaling) to and from an apparatus (for example, a network node providing the NF) included in the core network 30, another base station 10, and the like, and may acquire, transmit, and the like user data (user plane data), control plane data, and the like for the user terminal 20.

It is noted that the transmitting section and the receiving section of the base station 10 in the present disclosure may include at least one of the transmitting/receiving section 120, the transmitting/receiving antenna 130, and the transmission line interface 140.

Note that the base station 10 may be separated into three elements: a radio unit (RU), a distributed unit (DU), and a central unit (CU). For example, the RU may implement RF processing (digital beamforming, digital-to-analog conversion, analog beamforming, and the like) and lower functions of the physical layer (precoding, IFFT, FFT, and the like). The DU may implement higher functions (such as encoding to resource element mapping) of the physical layer, functions of the MAC layer, and functions of the RLC layer. The CU may implement functions of a PDCP layer, a service data adaptation protocol (SDAP) layer, and a RRC layer.

In the present disclosure, the base station 10 may include one device that implements all the functions of the RU, the DU, and the CU, or may include a plurality of devices that implement some of the functions of the RU, the DU, and the CU and are connected to each other. In the present disclosure, the base station 10 may be interchangeable with RU/DU/CU.

The transmitting/receiving section 120 may transmit the setting of a demodulation reference signal (DMRS) for a physical uplink shared channel. The control section 110 may determine, based on the setting, a plurality of frequency resources having a wider spacing than a plurality of certain frequency resources of a certain DMRS based on a certain setting, and control reception of the DMRS by using the plurality of frequency resources.

The transmitting/receiving section 120 may transmit the setting of a demodulation reference signal (DMRS) for a physical downlink shared channel. The control section 110 may determine, based on the setting, the plurality of frequency resources having a wider spacing than the plurality of certain frequency resources of the certain DMRS based on the certain setting, and control transmission of the DMRS by using the plurality of frequency resources.

The transmitting/receiving section 120 may transmit the setting of the demodulation reference signal (DMRS) for the physical uplink shared channel. The control section 110 may determine, based on the setting, one or more time resources that are a part of a plurality of certain time resources of a certain DMRS based on a certain setting, and control reception of the DMRS by using the one or more time resources.

The transmitting/receiving section 120 may transmit the setting of the demodulation reference signal (DMRS) for the physical downlink shared channel. The control section 110 may determine, based on the setting, one or more time resources that are a part of a plurality of certain time resources of a certain DMRS based on a certain setting, and control transmission of the DMRS by using the one or more time resources.

The transmitting/receiving section 120 may transmit the setting of the demodulation reference signal (DMRS) for the physical uplink shared channel. The control section 110 may determine, based on the setting, a plurality of resources that are a part of a plurality of certain resources of an orthogonal cover code, and control reception of the DMRS by using the one or more time resources.

The transmitting/receiving section 120 may transmit the setting of the demodulation reference signal (DMRS) for the physical downlink shared channel. The control section 110 may determine, based on the setting, the plurality of resources that are a part of the plurality of certain resources of the orthogonal cover code, and control transmission of the DMRS by using the one or more time resources.

### (User Terminal)

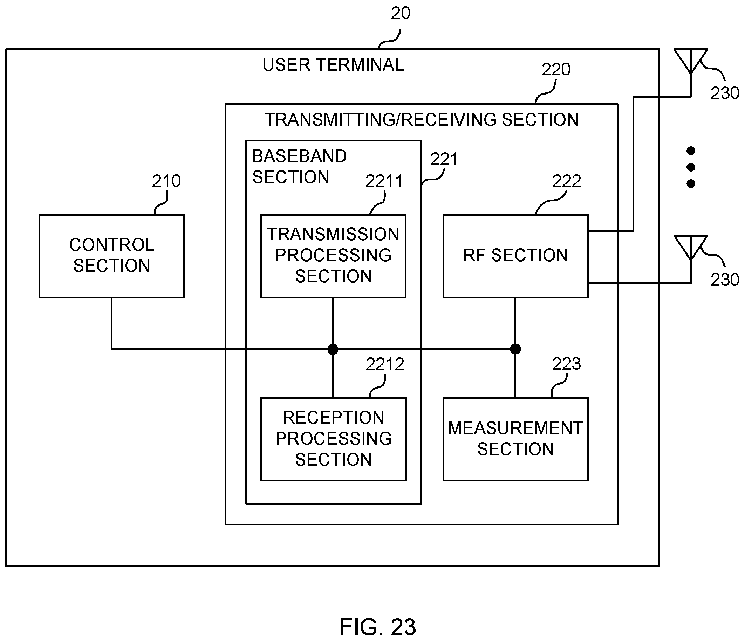

Fig. 23 illustrates an example of a configuration of the user terminal according to one embodiment. The user terminal 20 includes a control section 210, a transmitting/receiving section 220, and a transmitting/receiving antenna 230. It is noted that one or more of the control sections 210, one or more of the transmitting/receiving sections 220, and one or more of the transmitting/receiving antennas 230 may be included.

It is noted that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may forward the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna that is described based on common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

It is noted that whether to apply DFT processing may be determined based on configuration of transform precoding. In a case where transform precoding is enabled for a certain channel (for example, PUSCH), the transmitting/receiving section 220 (transmission processing section 2211) may perform the DFT processing as the transmission processing to transmit the channel using a DFT-s-OFDM waveform, and otherwise, may omit the DFT processing in the transmission processing.

The transmitting/receiving section 220 (RF section 222) may perform modulation to a radio frequency band, filtering processing, amplification, and the like on the baseband signal, to transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply, to the acquired baseband signal, reception processing such as analog-to-digital conversion, FFT processing, IDFT processing (as necessary), filtering processing, demapping, demodulation, decoding (which may include error correction decoding), MAC layer processing, RLC layer processing, PDCP layer processing, and the like, and may acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. A measurement result may be output to the control section 210.

It is noted that the measurement section 223 may derive channel measurement for CSI computation, based on a channel measurement resource. The channel measurement resource may be, for example, a non zero power (NZP) CSI-RS resource. In addition, the measurement section 223 may derive interference measurement for CSI computation, based on an interference measurement resource. The interference measurement resource may be at least one of an NZP CSI-RS resource for interference measurement, a CSI-interference measurement (IM) resource, or the like. It is noted that the CSI-IM may be referred to as CSI-interference management (IM), and may be interchangeable with a zero power (ZP) CSI-RS. It is noted that, in the present disclosure, CSI-RS, NZP CSI-RS, ZP CSI-RS, CSI-IM, CSI-SSB, and the like may be interchangeable with each other.

It is noted that the transmitting section and the receiving section of the user terminal 20 in the present disclosure may include at least one of the transmitting/receiving section 220 and the transmitting/receiving antenna 230.

The transmitting/receiving section 220 may receive settings related to a plurality of downlink reference signals and a plurality of points for transmission, and may receive the plurality of downlink reference signals. The control section 210 may determine a cluster that is a part of the plurality of points based on a result of reception of the plurality of downlink reference signals, the setting, and information related to deployment of a plurality of antennas of the terminal, and control transmission of a report related to the cluster and reception of a signal from the cluster.

The setting may indicate a relationship between the plurality of downlink reference signals and the plurality of points.

The signal may be transmitted from the cluster by coherent joint transmission (CJT).

The plurality of points may be deployed within a first two-dimensional grid, and the plurality of antennas may be deployed within a second two-dimensional grid.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus (one apparatus) that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

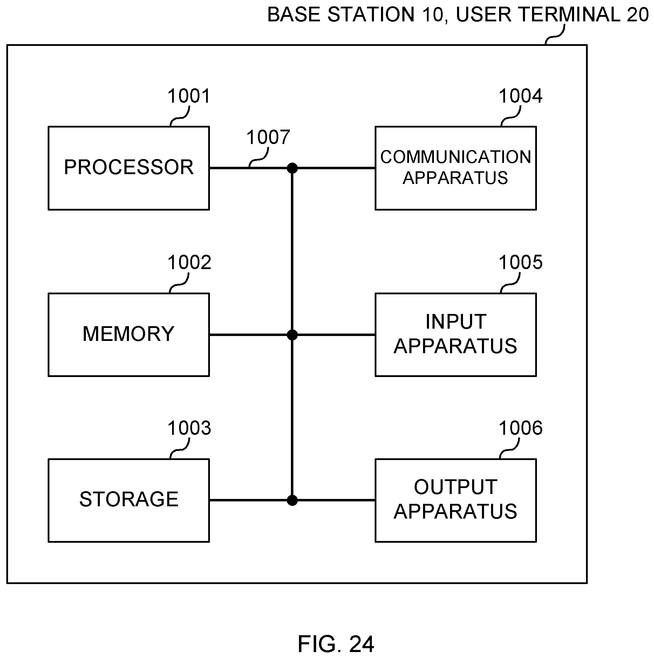

For example, a base station, a user terminal, and so on according to one embodiment of the present disclosure may function as a computer that executes the processes of the radio communication method of the present disclosure. FIG. 24 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware (these hardware).

It should be noted that an apparatus (e.g., a network node providing NF) included in the core network 30 may also be realized by the functional blocks/hardware structure described above.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the

### TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

For any information (e.g., variables, constants, parameters) described in the present disclosure, even if not explicitly stated in the above embodiments, information indicating/identifying [a value of] such information (or information related to such information) may be notified from any first device (e.g., UE/base station) to any second device (e.g., base station/UE).

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information (another information)).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

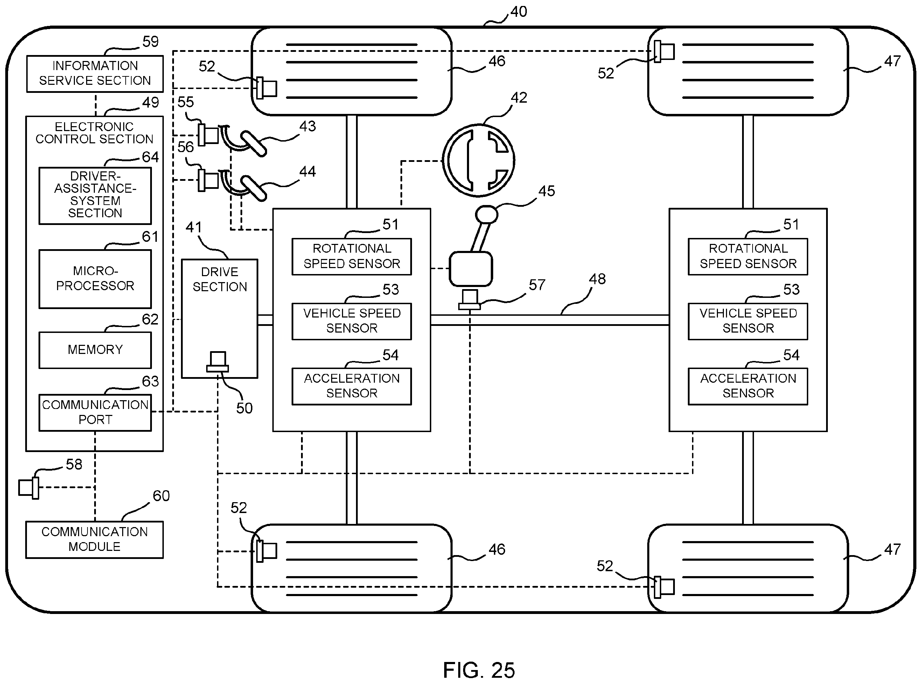

FIG. 25 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information (various information) such as driving information, traffic information, and entertainment information, such as a car navigation system, an audio system, a speaker, a display, a television, and a radio; and one or more ECUs that control these devices. The information service section 59 provides various pieces of information/services (various information/services) (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information (based on the information) stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s)..." ("..." may be expressed using, for example, a that-clause, a to-infinitive, or the like) may be used interchangeably with "be expected...", "..." (if "..." above is a to-infinitive, this "..." is a verb without "to"), or the like. "Does not expect..." may be used interchangeably with "be not expected...", "does not..." (if "..." above is a to-infinitive, this "..." is a verb without "to"), or the like. Furthermore, "an apparatus A is not expected..." may be used interchangeably with "an apparatus B other than the apparatus A does not expect... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a setting related to a plurality of downlink reference signals and a plurality of points for transmission and receives the plurality of downlink reference signals; and
a control section that determines a cluster that is a part of the plurality of points based on a result of reception of the plurality of downlink reference signals, the setting, and information related to deployment of a plurality of antennas of the terminal, and controls transmission of a report related to the cluster and reception of a signal from the cluster.

2. The terminal according to claim 1, wherein the setting indicates a relationship between the plurality of downlink reference signals and the plurality of points.

3. The terminal according to claim 1, wherein the signal is transmitted from the cluster by coherent joint transmission (CJT).

4. The terminal according to claim 1, wherein the plurality of points are deployed within a first two-dimensional grid, and the plurality of antennas are deployed within a second two-dimensional grid.

5. A wireless communication method of a terminal, the method comprising:
a step of receiving a setting related to a relationship between a plurality of downlink reference signals and a plurality of points for transmission;
a step of receiving the plurality of downlink reference signals;
a step of determining a cluster that is a part of the plurality of points based on a result of reception of the plurality of downlink reference signals, the setting, and information related to deployment of a plurality of antennas of the terminal; and
a step of controlling transmission of a report related to the cluster and reception of a signal from the cluster.

6. A base station comprising:
a transmitting section that transmits a setting related to a relationship between a plurality of downlink reference signals and a plurality of points for transmission and transmits the plurality of downlink reference signals; and a control section that determines a cluster that is a part of the plurality of points based on a result of reception of the plurality of downlink reference signals, the setting, and information related to deployment of a plurality of antennas of a terminal, and controls reception of a report related to the cluster and transmission of a signal from the cluster.
